# EUROPEAN PATENT APPLICATION

(11) **EP 1 493 331 A1**
(43) Date of publication of application: **05.01.2005**
(21) Application number: 04014702.7
(22) Date of filing: 23.06.2004
(51) Int. Cl.: A01M 21/04

(54) **Apparatus for manual, selective treatment of plants and use thereof**

(30) Priority: 30.06.2003 DK 200300986
(71) Applicant: Madsen, Lars Bodker, 8620 Kjellerup (DK)
(72) Inventor: Madsen, Lars Bodker, 8620 Kjellerup (DK)
(74) Representative: Schmidt, Jens Joergen

(57) **Abstract**

There is described an apparatus for manual, selective application of chemical substances, such as herbicides, pesticides, insecticides, growth inhibiting agents and the like, to plants near the surface of the earth, and use of such an apparatus.

The apparatus comprises a roller (7) and a counter-pressure part which is preferably a second roller (7') parallel with the first roller. In one state of the apparatus, the roller (7) and the counter-pressure part (7') have a distance between them so that they can be disposed around the plant parts to be treated, and in another state are brought closer to each other until both are in contact with the plant parts, after which the roller (7) or the rollers (7, 7') can be moved along the plant parts and transfer a fluid with the chemical substance(s) from one or both rollers to the plant parts. A contact pressure can herewith be brought about between the surface of the roller and the plant parts which extend up from the surface of the earth, so that the fluid with the chemical substance(s) is effectively transferred from the peripheral surface (8, 8') of the roller (7) or the counter-pressure part (7') to the surface of the plant parts.

## Description

The present invention relates to an apparatus for manual, selective application of chemical substances, such as herbicides, growth inhibitors, pesticides, insecticides and the like, to plants close to the surface of the earth, and the use of such an apparatus.

### BACKGROUND OF THE INVENTION

Today, it is known technique to apply chemical substances to plants by using emulsification or atomisation of a fluid substance containing the relevant chemical substance or substances and spraying them on the plants. The advantage with this method is that it is simple to apply the substances to a large number of plants by one single work process. A disadvantage with this method is that persons who carry out the spraying work are exposed to the chemical substance or substances and must use suitable protection arrangements in order not to be affected to a harmful degree. A second disadvantage is that the chemical substances can be spread beyond the intended target area, and herewith damage other plants and/or animal life.

In order to exercise a more selective application of chemical substances, use is made among other things of brushing or powdering of the substances on the plants. However, this is a labour-demanding process, and in practice it can not be used for other than very limited tasks.

From e.g. EP 0 058 611 A1 it is known to use a rotating, cylindrical brush to which the chemical substances are continuously applied in a fluid form, and which is manually moved along and in contact with the plants to be treated, whereby the substances are applied to the plants. Correspondingly, it is known from FR 1 334 210 and WO-A-95/29767 to use a first rotatably mounted roller, to the outer surface of which the chemical substances are applied in liquid form, either by means of a second, moistened roller which lies up against and parallel with said first roller, or by the outer surface of the roller being permeable and the chemical substances in liquid form being applied from the inside of the first roller. The chemical substances are applied to the plants in a manner corresponding to the above-mentioned arrangement by moving the first roller along and in contact with the plants to be treated.

However, these known arrangements for selective application of chemical substances to plants all require that the plant parts which shall be treated lie close to the earth, or other firm surface which can exert the required counter-pressure in order for the application roller or brush to be in sufficient contact with the leaves to be able to transfer the chemical substances to them.

It is an object of the present invention to provide an apparatus for selective application of chemical substances to plants, especially herbicides or growth inhibitors, which can be used on plant parts which are close to the surface of the earth and extend away from this surface.

This object is achieved with the apparatus according to the invention by providing a roller and a counter-pressure part, which is preferably a second roller parallel with the first roller. In one state of the apparatus, the roller and the counter-pressure part have a distance between them so that they can be placed around the plant parts which are to be treated, and are brought into another distance closer to each other until they are both in contact with the plant parts, after which the roller or the rollers can be moved along the plant parts and transfer a fluid with the chemical substance or substances from one or both rollers to the plant parts. A contact pressure can hereby be created between the surface of the roller and the plant parts which extend up from the surface of the earth, so that the fluid with the chemical substance or substances is effectively transferred from the peripheral surface of the roller or the counter-pressure part to the surface of the plant parts.

Other advantages of the apparatus according to the invention and its use will appear from the following detailed description of the invention and a specific embodiment hereof.

### BRIEF DESCRIPTION OF THE INVENTION

The invention relates to an apparatus for manual, selective application of chemical substances, especially pesticides such as e.g. glyphosat, to plants or parts thereof, said apparatus comprising a handling part with a handgrip and two mounting parts for the support respectively of a first roller which is freely rotatable around an axis thereof, and a counter-pressure part. The handling part also comprises a clamping mechanism which by a manual activation hereof via the handgrip gives rise to the movement of the two mounting parts, so that the distance between the peripheral surfaces of the first roller and the counter-pressure part is changed. Within the scope of the invention it can freely be chosen to what degree it is most expedient that the apparatus in the deactivated condition has a distance between the roller and the counter-pressure part, so that they can be introduced around those plant parts which are to be treated, or whether this distance is first achieved when the clamping mechanism is activated manually. According to the invention, the said distance can thus be changed by activation, depending on the configuration of the apparatus, to be either greater or smaller. The handling part is configured in such a manner that when an adult user standing upright with arms hanging downwards grips around the handgrip with his hand, the handling part will extend at an angle forwards and the axis of the roller will be close to and substantially parallel with the surface of the earth, so that the peripheral surface of the roller lies substantially against the surface of the earth or up to 10 centimetres above it, though preferably up to only 5 cm. The distance between the handgrip and the roller will thus typically be between 80 and 130 centimetres. The apparatus also comprises means for applying a fluid containing the chemical substances to the surface of at least one of the first roller and the counter-pressure part. However, in order to achieve an effective transfer of fluid to the plant parts, it is preferred that the fluid is applied to the roller.

The counter-pressure part can comprise a hard or soft fixed peripheral surface which comes into contact with the plant parts, and the surface preferably has a low friction against the plant parts during use of the apparatus, where the roller and the counter-pressure part are clamped together around the plant parts and moved along these parts. Therefore, it is preferred that the counter-pressure part comprises a second roller which is mounted in such a manner that both rollers are arranged freely rotatable around substantially parallel axes.

It is similarly preferred that the arrangement's clamping mechanism is spring biased with a resilient element such as elastic, so that the roller and the counter-pressure part are biased by the resilient element to be either in their open or clamped together state.

However, when the clamping mechanism is in the inactivated state, it is preferred that the peripheral surfaces of the roller and the counter-pressure part have a certain distance between them, such as e.g. 3-8 centimetres, while in the clamping mechanism's activated state they can be brought so close to each other as to be substantially in mutual contact.

Furthermore, it is preferred that the apparatus comprises a fluid container with a manually operated pump arrangement which pumps fluid from the container to at least one of the first roller and the counter-pressure part, and a carrying sling with which the user can support the fluid container during use of the apparatus.

The invention further relates to the use of the apparatus described above for the application of one or more chemical substances, mainly pesticides, to the parts of the plant which extend upwards from the surface of the earth.

### BRIEF DESCRIPTION OF THE DRAWING

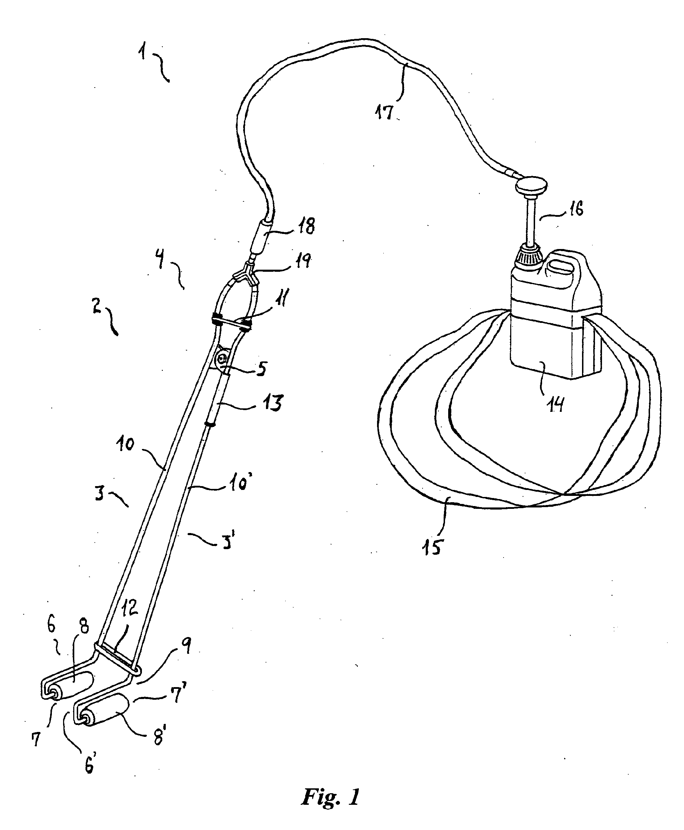

A preferred embodiment of the invention is described with reference to the attached drawing, where
Fig. 1 shows a perspective view of the apparatus according to the invention, and
Fig. 2 shows a detail of the one roller of the apparatus shown in fig. 1.

The shown embodiment is an example of how the invention can be configured, and shall not be considered to be a limitation for the extent of the present invention as disclosed in the attached set of claims.

### EMBODIMENT OF THE INVENTION

The arrangement 1 shown in the drawing comprises a handling part 2 which consists of two hollow metal tubes 3, 3', which near the upper ends 4 thereof are provided with a swivel link assembly 5, and where the lower ends of said tubes are formed as mounting parts 6, 6' for the support of two rollers 7, 7' so that these can rotate freely around two parallel axes which, when the apparatus is used, are substantially parallel with the surface of the earth. The rollers 7, 7' have an absorbent peripheral surface 8, 8' consisting e.g. of natural or synthetic sponge, woven or unwoven textile or a material with short pile. Known rollers which are used for the application of paint are suitable for the purpose. The hollow metal tubes 3, 3' are bent, partly to form the mounting parts 6, 6', and partly to ensure that the rollers 7, 7' are oriented correctly in relation to the surface of the earth when the apparatus 1 is used. This is achieved by provided the tubes 3, 3' with a bend 9 between the upper part 10, 10' of the tubes 3, 3' and the mounting parts 6, 6', but could similarly be achieved by arching the tubes 3, 3' in a suitable manner.

At the upper end 4 of the tubes 3, 3', above the swivel link assembly 5, an elastic 11 is mounted between the tubes 3, 3' so that these are biased inwards towards each other, and the rollers 7, 7' are hereby biased away from each other. This movement is limited by a bracket 12 which is secured to the one tube 3 and surrounds the other tube 3'. In the inactivated state of the apparatus, the distance between the peripheral surfaces 8, 8' of the rollers 7, 7' is thus typically 3-8 centimetres. The upper part of the tubes 10, 10' also comprise a handgrip 13, which is a non-skid coating on the one tube 3', so that a good hand contact is ensured. The distance between the handgrip 13 and the rollers 7, 7' is such that when an adult user stands upright with the arm substantially downwards and gripping around the handgrip 13, the rollers 7, 7' with be close to the surface of the earth, i.e. about 5 cm above the surface, which the user stands on, and will be positioned in the order of 20-40 centimetres in front of the user. The distance between the handgrip 13 and the rollers is thus typically in the order of 80-130 centimetres.

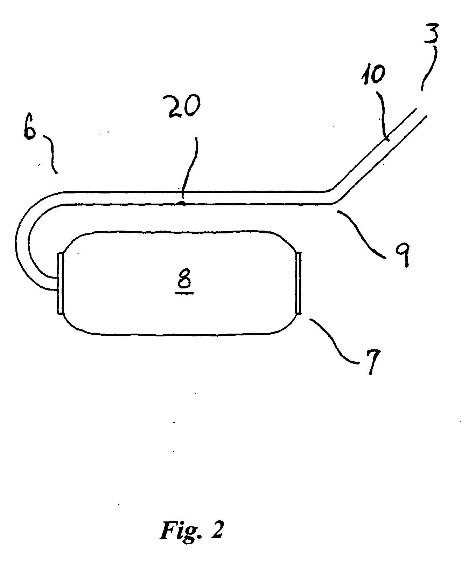

The apparatus 1 further comprises a fluid container 14 to which there is secured a carrying sling 15, so that the user can support the container 14 on the body during use of the apparatus 1. On the container 14 there is mounted a manual pump arrangement 16 which, with a flexible hose 17, is connected via a non-return valve 18 to a branch part 19 from which fluid from the container 14 is led to an upper end of the two hollow metal tubes 3, 3'. Each of the mounting parts 6, 6' comprise one or more nozzles 20, which in figure 2 are shown placed over the rollers 7, 7', so that the fluid which is under pressure in the tubes 3, 3' due to operation of the pump arrangement 16 and non-return valve 18, is sprayed out on the peripheral surfaces 8, 8' of the rollers 7, 7'. Alternatively, the fluid can be fed into the rollers 7, 7', in which case the rollers shall be porous and permit the fluid to penetrate to the peripheral surface 8, 8'. The apparatus 1 can possibly be configured so that the fluid is applied to only one of the rollers 7, 7', hereby simplifying the apparatus.

The apparatus is used by the user filling the container 14 with a fluid which contains the chemical substance(s) with which the plants are to be treated, mainly a pesticide. The user puts on the carrying sling 15 to support the container 14 on the body, and manually activates the pump arrangement 16 to bring the fluid under pressure in the tubes 3, 3', and via the nozzles 20 hereby sprays the fluid out on the rollers 7, 7'. The user grips around both tubes 3, 3'at the handgrip 13 and guides the rollers 7, 7' to a plant to be treated, so that parts of the plant extend up between the rollers. By clamping around the tubes 3, 3' at the handgrip 13, the rollers 7, 7' are brought towards each other until both of their peripheral surfaces 8, 8' lie up against the plant parts. In this situation, the distance between the rollers 7, 7' depends on the thickness of the plant parts, but their peripheral surfaces 8, 8' can lie substantially against each other. Thereafter, the user tilts the apparatus with a movement of the wrist so that the rollers 7, 7' are led upwards and hereby apply the fluid to the plant parts. When the user releases his grip on the tubes 3, 3' at the handgrip 13, the elastic 11 will move the rollers 7, 7' away from each other again, and they can be removed from the plant parts and used in a corresponding manner on other plant parts which are to be treated. The user operates the pump arrangement 16 at intervals in order to maintain the fluid pressure in the tubes 3, 3' and ensure that the peripheral surfaces 8, 8' are moistened with the fluid.

With the use of this apparatus 1, a large number of selected plant parts which extend up from the surface of the earth can thus be treated with a minimum of work and in a minimum amount of time, and in a manner which shows savings in the consumption of chemicals, which spares the surrounding environment, in that chemicals are applied only to the selected plant parts and without unintentional spreading, which is also an advantage to the user with regard to the working environment, and finally the use is physically lenient for the user, inasmuch as the treatment of the plants near the surface of the earth can take place in an upright working position.

## Claims

1. Apparatus for manual, selective application of chemical substances to plants, said apparatus comprising a handling part (2) with a handgrip (13) and two mounting parts (6, 6') for the support respectively of a first roller (7), which is freely rotatable around an axis thereof, and a counter-pressure part (7'), and a clamping mechanism (3, 3', 5) which, by activation thereof via the handgrip (13), results in the movement of the two mounting parts (6, 6') so that the distance between the peripheral surfaces (8, 8') of the first roller (7) and the counter-pressure part (7') is changed, and where the handling part (2) is configured in such a manner that when an adult standing upright with arms hanging downwards grips around the handgrip (13) with his hand, the handling part (2) will extend at an angle forwards and the axis of the roller (7) will be close to and substantially parallel with the surface of the earth, said apparatus further comprising means (14, 16, 17, 18, 19, 20) for the application of a fluid containing the chemical substances to the surface of at least one of the first roller (7) and the counter-pressure part (7').

2. Apparatus according to claim 1, where the counter-pressure part consists of a second roller (7'), so that both rollers (7, 7') are arranged in a freely rotatable manner around substantially parallel axes.

3. Apparatus according to claim 1 or 2, where the clamping mechanism is spring biased with a resilient element (11).

4. Apparatus according to claim 3, where with the clamping mechanism in the inactivated state the peripheral surfaces (8, 8') of the roller (7) and the counter-pressure part (7') have a certain distance between them, while with the clamping mechanism in the activated state they can be brought close to each other to be in substantially mutual contact.

5. Apparatus according to any of the foregoing claims, which further comprises a fluid container (14) with a manually operated pump arrangement (16) which pumps fluid from the container (14) to at least one of the first roller (7) and the counter-pressure part (7'), and a carrying sling (15) with which the user can support the fluid container (14) during the use of the apparatus (1).

6. Use of the apparatus (1) according to any of the claims 1-5 for the application of one or more chemical substances, mainly biocides, to plant parts which extend up from the surface of the earth.
